# EUROPÄISCHE PATENTSCHRIFT

(11) **EP 3 152 590 B1**
(45) Veröffentlichungstag und Bekanntmachung des Hinweises auf die Patenterteilung: **23.12.2020**
(21) Anmeldenummer: 15723715.7
(22) Anmeldetag: 22.05.2015
(51) Int. Cl.: G01S 15/93, G01S 15/46

(54) **VERFAHREN ZUM BESTIMMEN EINER POSITION EINES OBJEKTS IN EINER UMGEBUNG EINES KRAFTFAHRZEUGS, FAHRERASSISTENZSYSTEM UND KRAFTFAHRZEUG**
METHOD FOR DETERMINING A POSITION OF AN OBJECT IN THE SURROUNDINGS OF A MOTOR VEHICLE, DRIVER ASSISTANCE SYSTEM AND MOTOR VEHICLE
PROCÉDÉ DE DÉTERMINATION D'UNE POSITION D'UN OBJET DANS UN ENVIRONNEMENT D'UN VÉHICULE AUTOMOBILE, SYSTÈME D'ASSISTANCE AU CONDUCTEUR ET VÉHICULE AUTOMOBILE

(30) Priorität: 04.06.2014 DE 102014107827
(43) Veröffentlichungstag der Anmeldung: 12.04.2017
(73) Patentinhaber: Valeo Schalter und Sensoren GmbH, 74321 Bietigheim-Bissingen (DE)
(72) Erfinder: ROSTOCKI, Paul-David, 74321 Bietigheim-Bissingen (DE); GOTZIG, Heinrich, 74321 Bietigheim-Bissingen (DE)
(74) Vertreter: Enge, Sebastian
(86) Internationale Anmeldenummer: PCT/EP2015/061376
(87) Internationale Veröffentlichungsnummer: WO 2015/185376

(56) Entgegenhaltungen:
- US-A1- 2007 124 106

## Beschreibung

Die Erfindung betrifft ein Verfahren zum Bestimmen einer Position eines Objekts in einer Umgebung eines Kraftfahrzeugs. Die Erfindung betrifft außerdem ein Fahrerassistenzsystem für ein Kraftfahrzeug, wie auch ein Kraftfahrzeug mit einem Fahrerassistenzsystem.

Die DE 103 10 214 A1 beschreibt ein Verfahren zum Erfassen des Objekts in der Umgebung des Kraftfahrzeugs. Es ist ein Sensor beschrieben, welcher bezüglich der Umgebung eine Bewegung mit bekannter Geschwindigkeit ausführt und eine Frequenz von einem von dem Sensor ausgesandten und an dem Objekt reflektierten Signal erfasst. Aus einer Frequenzverschiebung der Frequenz zwischen dem ausgesandten und dem reflektierten Signal wird ein Richtungswinkel für das Objekt bezüglich einer Bewegungsrichtung des Sensors ermittelt. Das Verfahren basiert auf dem Dopplerprinzip. Das Dopplerprinzip beziehungsweise der Dopplereffekt ist die zeitliche Stauchung oder Dehnung eines Signals bei Veränderung eines Abstands zwischen einem Sender und einem Empfänger während der Dauer des Signals.

Die DE 10 2011 086 210 A1 offenbart ein Verfahren zur Erfassung des Objekts in einem Fahrschlauch des Kraftfahrzeugs. Der Fahrschlauch ist hierbei ein zukünftig durch das Kraftfahrzeug befahrener Bereich, welcher sich aufgrund der Durchführung eines Fahrmanövers ergibt. Es ist vorgesehen, dass das Kraftfahrzeug anhält, falls sich das Objekt in dem Fahrschlauch befindet.

Weiterhin ist aus der DE 103 61 315 A1 ein Verfahren zum Erfassen des Objekts in der Umgebung des Kraftfahrzeugs bekannt. Es wird hierbei abhängig von einer ersten Entfernung von dem Kraftfahrzeug zu dem Objekt und einer von der ersten Entfernung unterschiedlichen zweiten Entfernung des Objekts zu dem Kraftfahrzeug eine Position des Objekts berechnet. Die Berechnung der Position des Objekts geschieht mit Hilfe des Verfahrens der Triangulation. Die Abstandsmessungen erfolgen beispielsweise mittels eines Ultraschallsensors.

Bei bekannten Verfahren zur Objektdetektion kann der Fall auftreten, dass das Objekt, insbesondere bezüglich seiner Position zu einer Referenzlage, nicht präzise erfasst werden kann und somit nur eine ungenaue Aussage getroffen werden kann, ob sich das Objekt beispielsweise in dem Fahrschlauch des Kraftfahrzeugs befindet oder nicht.

Es ist Aufgabe der Erfindung, ein Verfahren, ein Fahrerassistenzsystem sowie ein Kraftfahrzeug zu schaffen, mit welchem bzw. bei welchem eine Position eines Objekts in einer Umgebung des Kraftfahrzeugs genauer bestimmt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst.

Bei einem erfindungsgemäßen Verfahren wird eine relative Position eines sich in einer Umgebung eines Kraftfahrzeugs befindlichen stationären Objekts bezüglich der in die Umgebung verlängerten Längsachse des Kraftfahrzeugs bestimmt. Es wird bei sich entlang einer Fahrstrecke sich fortbewegendem Kraftfahrzeug an einer ersten Wegstreckenstelle der Fahrstrecke ein erster Abstandswert zwischen einer fahrzeugseitigen Detektionseinrichtung und dem Objekt bestimmt und an zumindest einer zweiten Wegsreckenstelle der Fahrstrecke ein zweiter Abstandswert zwischen der fahrzeugseitigen Detektionseinrichtung und dem Objekt bestimmt. Ein wesentlicher Gedanke der Erfindung ist darin zu sehen, dass aus den zumindest zwei Abstandswerten eine Abstandsänderung bestimmt wird und die Abstandsänderung und die dazugehörigen zwischen den Wegstreckenstellen zurückgelegte Wegstrecke für die Bestimmung der relativen Position des Objekts bezüglich der verlängerten Längsachse des Kraftfahrzeugs berücksichtigt werden. Dadurch wird eine Positionsbestimmung eines Objekts zu einer derartig spezifizierten und von dem Kraftfahrzeug abhängigen Referenzlage, der verlängerten Längsachse, präzisiert.

Es wird der Wert der wegstreckenabhängigen Abstandsänderung mit einem ersten wegstreckenabhängigen Abstandsänderungs-Schwellwert verglichen und abhängig von dem Vergleich wird erkannt, ob das Objekt in einem um die Längsachse definierten ersten Bereich angeordnet ist. Es wird somit eine Aussage ermöglicht, ob sich das Objekt auf möglicher Kollision mit dem Kraftfahrzeug befindet.

Alternativ oder kumulativ wird der Wert der wegstreckenabhängigen Abstandsänderung mit einem zweiten wegstreckenabhängigen Abstandsänderungs-Schwellwert verglichen und abhängig von dem Vergleich wird erkannt, ob das Objekt auf oder seitlich nahe zur verlängerten Längsachse angeordnet ist.

Alternativ oder kumulativ wird der Wert der wegstreckenabhängigen Abstandsänderung mit einem dritten wegstreckenabhängigen Abstandsänderungs-Schwellwert verglichen und abhängig von dem Vergleich wird erkannt, ob das Objekt in einem an einen um die Längsachse definierten ersten Bereich seitlich angrenzenden Angrenzungsbereich angeordnet ist. Dadurch wird die Genauigkeit der Erkennung von einer Position des Objekts außerhalb des eines insbesondere einen Kollisionsbereich definierenden ersten Bereichs, aber seitlich nahe dazu angeordnetem Objekt verbessert.

Vorzugsweise wird als relative Position ein Abstand des Objekts senkrecht zur verlängerten Längsachse bestimmt. Durch eine solche laterale Positionsbestimmung wird gerade beim Bewegen des Kraftfahrzeugs auf das Objekt zu, eine verbesserte Aussagegenauigkeit darüber ermöglicht, ob sich das Objekt seitlich zum Kraftfahrzeug befindet oder das Kraftfahrzeug mit dem Objekt kollidieren könnte.

Vorzugsweise wird zumindest ein Abstandswert als erster Abstandswert in einem ersten Längendrittel der Fahrstrecke bestimmt und es wird zumindest ein weitere Abstandswert als zweiter Abstandswert in einem dritten Längendrittel der Fahrstrecke bestimmt. Dadurch wird die Aussagegenauigkeit über die tatsächliche Position des Objekts zum Kraftfahrzeug erhöht. Denn es wird zumindest ein Abstandswert bestimmt, wenn das Kraftfahrzeug bezüglich der Fahrstrecke gesehen noch relativ weit weg ist und zumindest ein Abstandswert bestimmt, wenn es relativ nah zum Objekt ist. Da sich abhängig von der Position des Kraftfahrzeugs zum Objekt gerade entlang der Fahrstrecke Änderungen ergeben können, ist durch diese Ausführung die Aussagepräzision über die relative Position des Objekts wesentlich erhöht.

Vorzugsweise wird unterschieden, ob sich die relative Position des Objekts nah an der verlängerten Längsachse befindet oder weiter weg von der verlängerten Längsachse befindet, wobei durch eine derartige ungefähre Positionsinformation schon beispielsweise eine Kollisionswahrscheinlichkeit erkannt werden kann.

Vorzugsweise wird der erste Bereich als Fahrschlauch des Kraftfahrzeugs charakterisiert. Dadurch wird der potenzielle Kollisionsbereich genau vorgegeben.

Vorzugsweise wird ein Warnsignal zur Signalisierung einer vermeintlichen potenziellen Kollision des Kraftfahrzeugs mit dem Objekt unterdrückt, wenn das Objekt außerhalb des ersten Bereichs aber in dem Angrenzungsbereich detektiert wurde. Es ist somit vorgesehen, dass kein Signal an den Fahrer ausgegeben wird, falls sich das Objekt nicht in dem Fahrschlauch befindet. Das Unterdrücken des Signals hat den Vorteil, dass beispielsweise ein Fahrer des Kraftfahrzeugs nicht in seiner Konzentration beeinträchtigt oder irritiert wird. Es kann somit auch vorgesehen sein, dass das semiautonome oder autonome Einparken auch beispielsweise ohne Unterbrechung fortgesetzt wird, falls sich das Objekt in dem Angrenzungsbereich befindet. Es kann außerdem der Fall sein, dass der semiautonome oder autonome Einparkvorgang langsamer beziehungsweise vorsichtiger ausgeführt wird, wenn sich das Objekt in dem Angrenzungsbereich befindet.

Vorzugsweise wird als der Angrenzungsbereich ein derartiger bezüglich zumindest eines vorhandenen Objekts erfasst, welcher eine Ausdehnung senkrecht zu einer Längsachse des ersten Bereichs aufweist, die maximal 15% der Breite des ersten Bereichs entspricht. Dadurch wird der Angrenzungsbereich senkrecht zur Längsachse sehr schmal definiert, wodurch eine Lageerkennung eines Objekts außerhalb des ersten Bereichs, insbesondere eines Fahrschlauchs des Kraftfahrzeugs, aber seitlich sehr nah dazu verbessert wird.

Vorzugsweise wird ein Funktionsgraph durch darstellen der zumindest beiden Abstandswerte abhängig von den zugehörigen Wegstreckenstellen und Verbinden der Abstandswerte erzeugt und die Steigung des Funktionsgraphen wird bestimmt. Die Steigung wird für die Bestimmung der relativen Position des Objekts zur in die Umgebung verlängerten Längsachse des Kraftfahrzeugs berücksichtigt, und beispielsweise mit einer Referenzsteigung verglichen. Abhängig von der Intervallbreite der Wegstreckenstellen kann durch diese Vorgehensweise die Genauigkeit der Positionsbestimmung des Objekts verbessert werden. Denn auch abhängig davon, wie der Funktionsgraph verläuft kann die Steigung als repräsentative Größe an einer Stelle oder an mehreren Stellen als aus dann mehreren Steigungswerte bestimmte Steigung des Funktionsgraphen eine genauere Information zur Bestimmung der Objektposition geben.

Die Steigung, welche auch als Anstieg bezeichnet werden kann, bezeichnet eine Steilheit des Funktionsgraphen. Um die Steigung an einem bestimmten Punkt des Funktionsgraphen zu bestimmen, wird eine erste Ableitung, welche aus der Differenzialrechnung bekannt ist, bestimmt.

Es kann vorgesehen sein, dass eine Mehrzahl von ersten Abstandswerten des Kraftfahrzeugs zum Objekt beim Fortbewegen des Kraftfahrzeugs entlang eines ersten Fahrstreckenabschnitts einer Fahrstrecke des Kraftfahrzeugs mit zumindest einer kraftfahrzeugseitigen Detektionseinrichtung erfasst wird. Weiterhin wird dann ein erster Funktionsgraph durch ein Darstellen von zumindest zwei ersten Abstandswerten abhängig von der zurückgelegten Wegstrecke des Kraftfahrzeugs in den ersten Fahrstreckenabschnitt und Verbinden der ersten Abstandswerte erzeugt. Eine erste Steigung des ersten Funktionsgraphen wird bestimmt. Es wird zumindest eine Mehrzahl von zweiten Abstandswerten des Kraftfahrzeugs zum Objekt beim Fortbewegen des Kraftfahrzeugs entlang eines zum ersten unterschiedlichen zumindest zweiten Fahrstreckenabschnitts einer Fahrstrecke des Kraftfahrzeugs mit der zumindest einen kraftfahrzeugseitigen Detektionseinrichtung erfasst. Folglich wird zumindest ein zweiter Funktionsgraph durch ein Darstellen von zumindest zwei der zweiten Abstandswerte abhängig von der zurückgelegten Wegstrecke des Kraftfahrzeugs in dem zweiten Fahrstreckenabschnitt und Verbinden der zweiten Abstandswerte erzeugt. Darüber hinaus wird eine zweite Steigung des zweiten Funktionsgraphen bestimmt, und die erste Steigung wird mit der zweiten Steigung verglichen, wobei abhängig von dem Vergleich eine relative Position des Objekts zum Kraftfahrzeug bestimmt wird.

Dadurch wird es möglich, dass anhand einer Mehrzahl von Abstandswerten des Kraftfahrzeugs an unterschiedlichen Positionen und der Fahrstrecke beziehungsweise der Fahrstreckenabschnitte die relative Position des Objekts zum Kraftfahrzeug genau bestimmt werden kann. Mit anderen Worten, es werden der erste Funktionsgraph und der zweite Funktionsgraph abhängig von einem Verhältnis des ersten beziehungsweise des zweiten Abstandswertes zu dem ersten beziehungsweise dem zweiten Fahrstreckenabschnitt erzeugt. Aufgrund von einem Vergleich der Steigungen des ersten und des zweiten Funktionsgraphen kann die relative Position, insbesondere eine Position senkrecht zu einer Längsachse des Kraftfahrzeuges, des Objektes bestimmt werden. Das Prinzip beruht darauf, dass sich das Objekt beim Fortbewegen des Kraftfahrzeuges bezüglich der Annäherungswegstrecke umso schneller im Vergleich dazu gleichmäßiger annähert, je näher es sich zu der Längsachse des Kraftfahrzeuges befindet. Durch die Bestimmung der Steigungen von Funktionsgraphen und deren Vergleich ist eine sehr präzise Aussage über die örtliche Lage eines Objekts relativ zum Kraftfahrzeug ermöglicht.

Es kann vorgesehen sein, dass in einem Fahrstreckenabschnitt jeweils eine Vielzahl von Messpunkten, also Abstandswerte bei sich fortbewegendem Kraftfahrzeug, für den Funktionsgraphen berücksichtigt werden, so dass die Genauigkeit des Verlaufs des Funktionsgraphen erhöht ist und dadurch die Steigung genauer bestimmt werden kann.

Insbesondere kann eine den Funktionsgraphen charakterisierende Steigung an einer bestimmten repräsentativen Stelle des Funktionsgraphen, beispielsweise in der Mitte der Länge des Funktionsgraphen oder des Fahrstreckenabschnitts bestimmt werden. Vorzugsweise wird an mehreren Stellen des Funktionsgraphen jeweils ein Steigungswert bestimmt und eine dann repräsentative Steigung aus den einzelnen Steigungswerten bestimmt, beispielsweise durch Mittelwertbildung.

Es kann auch vorgesehen sein, dass als die relative Position eine Entfernung des Objekts senkrecht zu einer Längsachse des Kraftfahrzeugs, bei Orientierung des Kraftfahrzeugs bei der Erfassung der ersten Abstandswerte und/oder bei der Erfassung der zweiten Abstandswerte, bestimmt wird. Die Entfernung des Objekts senkrecht zu einer Längsachse des Kraftfahrzeugs hat insbesondere den Vorteil, dass diese Entfernung verwendet werden kann, um festzustellen, ob sich das Objekt in einem Fahrschlauch des Kraftfahrzeugs befindet oder nicht. Dies ist wiederum von Relevanz, wenn der Fahrschlauch, beispielsweise bei einem Einparkvorgang in eine Garage, seitlich von dem Objekt beziehungsweise Hindernis begrenzt ist. Besonders vorteilhaft ist diese Information dann, wenn ein Objekt sehr nah aber außerhalb eines Fahrschlauchs sich befindet, da hier eine besondre Lagepräzision erforderlich ist, um eine korrekte Reaktion des Fahrerassistenzsystems zu erhalten.

In einer Ausführungsform ist vorgesehen, dass erkannt wird, dass sich das Objekt in einem Fahrschlauch des Kraftfahrzeugs befindet, wenn die Abweichung der Steigungen kleiner als ein erster Steigungsschwellwert ist. Der Vorteil des ersten Steigungsschwellwertes ist insbesondere darin zu sehen, dass sich damit sehr präzise erkennen lässt, ob sich das Objekt in dem Fahrschlauch befindet oder nicht.

Ergänzend oder alternativ ist vorgesehen, dass erkannt wird, dass sich das Objekt in der Umgebung des Kraftfahrzeugs auf der oder zumindest innerhalb eines schmalen Toleranzintervalls seitlich dazu der in die Umgebung verlängerten Längsachse des Kraftfahrzeugs befindet, wenn die Abweichung der Steigungen kleiner als ein zweiter Steigungsschwellwert ist. Vorzugsweise ist der zweite Steigungsschwellwert kleiner oder gleich einem Unterschied von 5% zwischen den beiden Steigungen der Funktionsgraphen.

Es ist vorgesehen, dass der erste Steigungsschwellwert größer ist als der zweite Steigungsschwellwert. Der zweite Steigungsschwellwert ist insbesondere 0. Wenn sich das Objekt auf der verlängerten Längsachse des Kraftfahrzeugs befindet, ist der erste Funktionsgraph in Verbindung mit dem zweiten Funktionsgraph linear, das heißt die Steigung weicht nur in einem Toleranzbereich der Messungen ab. Im theoretischen Idealfall ist die Abweichung der Steigungen für diese spezielle Situation 0.

Insbesondere ist vorgesehen, dass erkannt wird, dass sich das Objekt in einem seitlich an den Fahrschlauch des Kraftfahrzeugs direkt angrenzenden Angrenzungsbereich befindet, wenn die Abweichung der Steigungen kleiner als ein dritter Steigungsschwellwert ist. Der dritte Steigungsschwellwert ist insbesondere größer als der erste und der zweite Steigungsschwellwert. Vorteilhaft an dem dritten Steigungsschwellwert ist, dass dadurch ermittelt werden kann, ob das Objekt für das Fahrzeug zu einem Hindernis wird oder nicht. Wird ermittelt, dass sich das Objekt in dem direkt angrenzenden Angrenzungsbereich befindet, so ist das Objekt kein Hindernis, und eine Fahrt beziehungsweise ein Rangiervorgang kann fortgesetzt werden. Dieser Angrenzungsbereich ist besonders hilfreich in dem Fall von Rangiermanövern und begrenztem Platzangebot. Es kann also anhand des dritten Schwellwerts präzise bestimmt werden, ob sich das Objekt nahe neben dem Fahrschlauch befindet. Das kann von Bedeutung sein, wenn ein durch das Objekt begrenzter Stellplatz oder eine durch das Objekt begrenzte Garage angefahren beziehungsweise anmanövriert wird.

Bevorzugt wird der erste Fahrstreckenabschnitt entlang der Fahrstrecke in einem ersten Längendrittel der Fahrstrecke vorgegeben, welches insbesondere mit dem Beginn der Objekterfassung beginnt. Der erste Fahrstreckenabschnitt kann somit als ein Initialisierungsschritt des Verfahrens bezeichnet werden. Auch kann durch den ersten Fahrstreckenabschnitt der erste Funktionsgraph erzeugt werden, welcher dann als Vergleichswert oder Referenzwert für folgende Funktionsgraphen verwendet werden kann.

In einer weiteren Ausgestaltung ist vorgesehen, dass der zweite Fahrstreckenabschnitt entlang der Fahrstrecke nach dem ersten Fahrstreckenabschnitt und vor dem Erreichen einer in Fahrtrichtung des Kraftfahrzeugs zumindest gleichen Abschnittslage des Kraftfahrzeugs und des Objekts vorgegeben wird. Es ist somit vorgesehen, dass der zweite Fahrstreckenabschnitt zeitlich und streckenmäßig nach dem ersten Fahrstreckenabschnitt liegt. Es kann auch vorgesehen sein, dass die jeweiligen Funktionsgraphen der jeweiligen Fahrstreckenabschnitte sequentiell, das heißt in der Reihenfolge ihrer Erfassung, verglichen werden. Es kann aber auch vorgesehen sein, dass die jeweiligen Funktionsgraphen beziehungsweise deren Steigungen so verglichen werden, dass eine zu einem späteren Zeitpunkt erfasste Steigung mit zumindest einer zu einem früheren Zeitpunkt erfassten Steigung verglichen wird.

Weiterhin ist bevorzugt vorgesehen, dass die Erfassung des Objekts bei einem Parkvorgang des Kraftfahrzeugs durchgeführt wird, insbesondere bei einem Parkvorgang auf einer Parkfläche mit seitlich naher Begrenzung. Die Begrenzung kann in diesem Fall als das Objekt vorliegen. Es tritt häufig der Fall ein, dass die Parkfläche derart nahe durch das Objekt begrenzt ist, dass zum Auswerten der Abstandswerte der Detektionseinrichtung ein besonders präzises Verfahren benötigt wird. Vorliegend kann es vorgesehen sein, dass der Parkvorgang des Kraftfahrzeugs semiautonom oder autonom durchgeführt wird. Das Objekt, welches die Parkfläche seitlich begrenzt, sollte nun besonders genau erfasst werden, da auf eine menschliche Kontrollinstanz zumindest teilweise verzichtet wird. Es ist vorteilhaft, wenn bei dem Einparkvorgang präzise ermittelt werden kann, ob sich das Objekt in dem Fahrschlauch, welcher sich auf die Parkfläche erstreckt, befindet oder ob sich das Objekt in dem Angrenzungsbereich befindet. Falls sich das Objekt in dem Angrenzungsbereich befindet, wird es nicht als kollidierendes Hindernis erfasst.

Insbesondere wird die Detektionseinrichtung mit zumindest einem Ultraschallsensor ausgebildet. Der Ultraschallsensor erfasst beziehungsweise misst einen radialen Abstand von dem Kraftfahrzeug zu dem Objekt. In einer besonderen Ausgestaltungsform können auch mehrere Ultraschallsensoren vorgesehen sein. Die relative Position des Objekts kann nun redundant anhand von mehreren Ultraschallsensoren bestimmt werden.

Vorzugsweise ist die Fahrstrecke eine insbesondere innerhalb eines Toleranzintervalls zwischen +/- 10% gerade Linie.

Ein erfindungsgemäßes Fahrerassistenzsystem für ein Kraftfahrzeug umfasst zumindest eine Detektionseinrichtung zum Erfassen eines Objekts in einer Umgebung eines Kraftfahrzeugs, welches dazu ausgelegt ist, ein erfindungsgemäßes Verfahren durchzuführen.

Ein erfindungsgemäßes Kraftfahrzeug, insbesondere ein Personenkraftwagen, umfasst ein erfindungsgemäßes Fahrerassistenzsystem.

Die mit Bezug auf das erfindungsgemäße Verfahren erläuterten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Ausführungsbeispiele der Erfindung werden nachfolgend anhand schematischer Zeichnungen näher erläutert.

Dabei zeigen:
- Fig. 1: in schematischer Draufsicht ein Ausführungsbeispiel eines erfindungsgemäßen Kraftfahrzeugs mit einem Ausführungsbeispiel einer erfindungsgemäßen Fahrerassistenzeinrichtung an einer ersten Wegstreckenstelle entlang einer Fahrstrecke;
- Fig. 2: in schematischer Draufsicht das Kraftfahrzeug an einer zweiten Wegstreckenstelle entlang der Fahrstrecke;
- Fig. 3: in schematischer Draufsicht das Kraftfahrzeug an einer dritten Wegstreckenstelle entlang der Fahrstrecke;
- Fig. 4: in schematischer Draufsicht das Kraftfahrzeug an einer vierten Wegstreckenstelle entlang der Fahrstrecke;
- Fig. 5: ein erstes Diagramm, in welchem beispielhaft Funktionsgraphen dargestellt sind, durch welche Abstandswerte eines ersten Objekts zu dem Kraftfahrzeug abhängig von einer zurückgelegten Wegstrecke des Kraftfahrzeugs gezeigt sind; und
- Fig. 6: ein zweites Diagramm, in welchem beispielhaft Funktionsgraphen dargestellt sind, durch welche Abstandswerte weiterer Objekte zu dem Kraftfahrzeug abhängig von einer zurückgelegten Wegstrecke des Kraftfahrzeugs gezeigt sind.

In den Figuren werden gleiche oder funktionsgleiche Elemente mit den gleichen Bezugszeichen versehen.

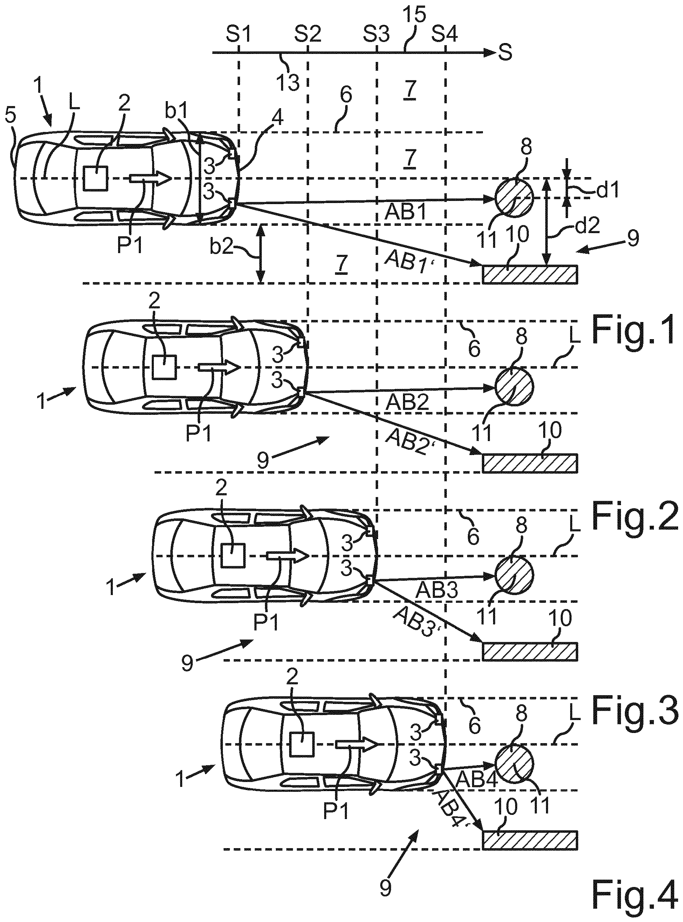

In Fig. 1 ist in einer schematischen Draufsichtdarstellung ein Kraftfahrzeug 1 gezeigt welches sich entlang der Richtung P1 fortbewegt. Das Kraftfahrzeug 1 weist eine Längsachse L auf. Das Kraftfahrzeug 1 umfasst eine Fahrerassistenzeinrichtung bzw. ein Fahrerassistenzsystem 2, welches ein Manövrieren des Kraftfahrzeugs 1 unterstützt. Durch das Fahrerassistenzsystem 2 kann das Kraftfahrzeug 1 semi-autonom oder vollautonom bewegt werden und in dem Zusammenhang als Manövrieren insbesondere ein Parkvorgang durchgeführt werden.

Das Fahrerassistenzsystem 2 umfasst zumindest ein Steuergerät und eine Mehrzahl von Detektionseinrichtungen 3, die im Ausführungsbeispiel als Ultraschallsensoren ausgebildet sind und zumindest in einem Frontbereich 4 des Kraftfahrzeugs 1 angeordnet sind. Es kann auch vorgesehen sein, dass auch an einem Heck 5 des Kraftfahrzeugs 1 ebenfalls eine Mehrzahl von Detektionseinrichtungen, insbesondere Ultraschallsensoren, angeordnet ist. Sowohl die Anzahl als auch die örtliche positionelle Anordnung der Detektionseinrichtungen 3 ist lediglich beispielhaft zu verstehen.

Die Detektionseinrichtungen 3 können auch als Radarsensoren oder als Laserscanner ausgebildet sein.

Das Kraftfahrzeug 1 weist senkrecht zu seiner Längsachse L eine, insbesondere maximale, Breite b1 auf. Durch diese Breite b1 ist auch eine Breite eines beispielhaften Fahrschlauchs 6 insbesondere definiert, der die weitere Fortbewegung des Kraftfahrzeugs 1 insbesondere abhängig von der momentanen Fortbewegungsrichtung gemäß dem Pfeil P1 und/oder anderer Parameter, wie beispielsweise Lenkwinkel, Geschwindigkeit etc., vorgibt und somit die zukünftig zu erwartende Geometrie bzw. Ersteckung dieses Fahrschlauchs 6 auf Basis dieser Informationen vorausschauend charakterisiert.

Mittels den Detektionseinrichtungen 3 wird eine Umgebung 7 des Kraftfahrzeugs 1 erfasst und es wird erkannt, ob sich in dieser Umgebung 7 Hindernisse befinden.

Dazu werden bei einem Erfassen von Objekten Abstandswerte des Kraftfahrzeugs 1 zu einem Objekt bestimmt.

In dem Zusammenhang können Objekte erfasst werden, die im Fahrschlauch 6 angeordnet sind. Beispielsweise ist hier ein stationäres und somit ortsfestes Objekt 8 gezeigt. Darüber hinaus können auch Objekte erfasst werden, die außerhalb des Fahrschlauchs 6 angeordnet sind und insbesondere in einem Angrenzungsbereich 9 sich befinden. Der Angrenzungsbereich 9 grenzt senkrecht zur Längsachse L und somit auch zur Mittenachse bzw. Längsachse des Fahrschlauchs 6 seitlich an den Fahrschlauch 6, insbesondere beidseits, an. Der Angrenzungsbereich 9 definiert sich im Ausführungsbeispiel insbesondere dadurch, dass seine Erstreckung senkrecht zur Achse L vorzugsweise maximal 15 % der Breite des Fahrschlauchs 6 und somit auch der Breite b1 beträgt, wobei sich dadurch beidseits des Fahrschlauchs 6 jeweils eine Breite b2 für den Angrenzungsbereich 9 ergibt. Der jeweils seitliche Angrenzungsbereich 9 ist daher jeweils relativ schmal und es können somit Objekte außerhalb des Fahrschlauchs 6 erfasst werden, die somit sehr nahe zum Kraftfahrzeug 1 angeordnet sind, jedoch bei entsprechender weiterer auf Basis aktueller Informationen vorhersagbarer Fortbewegung des Kraftfahrzeugs 1 keine kollidierenden Hindernisse darstellen.

Im Beispiel gemäß Fig. 1 ist ein stationäres Objekt 10 in diesem einen seitlichen Angrenzungsbereich 9 dargestellt. Das Objekt 8, mit einem beispielhaften Mittelpunkt 11 dargestellt, und das Objekt 10 sind sowohl im Hinblick auf Anzahl und Geometrie lediglich beispielhaft und symbolhaft zu verstehen.

In dem Zusammenhang kann das Objekt 10 beispielsweise eine Wand einer Garage sein oder ein anderes Begrenzungselement sein, wie beispielsweise ein geparktes Fahrzeug, das dann benachbart zu einer Parklücke, in welche das Kraftfahrzeug 1 entlang des Fahrschlauchs 6 einparken kann, angeordnet ist. Auch können es beispielsweise anderweitige Wände oder Säulen oder Pfosten beispielsweise in einer Tiefgarage sein.

Um nun einerseits ein im Fahrschlauch 6 angeordnetes Objekt, beispielsweise das Objekt 8, und/oder das in dem Angrenzungsbereich 9 angeordnete Objekt 10 in ihrer örtlichen Lage und Position zum Kraftfahrzeug 1 präzise erfassen zu können, arbeitet das Fahrerassistenzsystem 2 in besonders bevorzugter Weise.

In dem Zusammenhang soll zunächst eine Objekterfassung anhand des Objekts 8 im Fahrschlauch 6 erläutert werden.

Ausgehend von der Darstellung in Fig. 1 befindet sich das Kraftfahrzeug 1 an einer Wegstreckenstelle S1 einer Fahrstrecke S, entlang derer sich das Kraftfahrzeug 1 in Richtung des Pfeils P1 geradlinig bewegt. Das Kraftfahrzeug 1 bewegt sich somit auf das Objekt 8 zu. Die Wegstreckenstelle S1 ist im Ausführungsbeispiel auch der Startpunkt der Fahrstrecke S. Insbesondere mit Beginn des Fortbewegens des Kraftfahrzeugs 1 wird das Erfassen einer Mehrzahl von Abstandswerten AB durch die Detektionseinrichtungen 3 zum Objekt 8 begonnen. Beispielhaft ist in Fig. 1, der Übersichtlichkeit dienend, nur die Erfassung von Abstandswerten durch die untere Detektionseinrichtung 3 eingezeichnet.

Es kann vorgesehen sein, dass allgemein zwischen zwei aufeinanderfolgenden Messungen bezüglich der Abstandswerte AB ein Zeitfenster zwischen 5 Millisekunden und 40 Millisekunden beträgt.

Abhängig von der Geschwindigkeit des Kraftfahrzeugs 1 werden somit innerhalb dieser Zeitabstände, zu denen Messungen der Abstandswerte AB durchgeführt werden, verschiedene Wegstrecken durchfahren.

In Fig. 1 ist nunmehr die Situation gezeigt, bei welcher ein Abstandswert AB1 von der Detektionseinrichtung 3 zu dem Objekt 8 an der Wegstreckenstelle S1 erfasst wird.

Bewegt sich das Kraftfahrzeug 1 dann entsprechend der Pfeilrichtung P1 fort, so erreicht es entlang der Fahrstrecke S dann, wie dies in Fig. 2 dargestellt ist, eine Wegstreckenstelle S2. An dieser wird dann ein weiterer Abstandswert AB2 zum Objekt 8 erfasst.

Es kann dann aus den zumindest zwei Abstandswerten AB1 und AB2 eine Abstandsänderung bestimmt werden, wobei in dem Zusammenhang die Differenz zwischen den beiden Abstandswerten AB1 und AB2 bestimmt wird. Diese Abstandsänderung und die dazugehörige, zwischen den Wegstreckenstellen S1 und S2 zurückgelegte Wegstrecke, die ebenfalls durch eine entsprechende Differenzbildung bestimmt wird, werden für eine Bestimmung einer relativen Position des Objekts 8 bezüglich der in die Umgebung 7 verlängerten Längsachse L des Kraftfahrzeugs 1 berücksichtigt. Insbesondere wird dabei als eine entsprechende relative Position ein Abstand d1 des Objekts 8 senkrecht zu dieser verlängerten Längsachse L bestimmt.

Vorzugsweise ist vorgesehen, dass sich darüber hinausgehend bei weiterer Fortbewegung des Kraftfahrzeugs 1 entlang des Pfeils P1 weitere Messungen zu Abstandswerten ergeben, die dann ebenfalls wieder berücksichtigt werden. In dem Zusammenhang ist in Fig. 3 eine Situation gezeigt, bei welcher sich das Kraftfahrzeug 1 dann an der weiteren Wegstreckenstelle S3 und somit weiter angenähert zum Objekt 8 befindet. An dieser dritten Wegstreckenstelle S3 wird dann in einem Ausführungsbeispiel ein weiterer Abstandswert AB3 zum Objekt 8 bestimmt. Es kann dann vorgesehen sein, dass hier dann wiederum eine Abstandsänderung als Differenzbildung zwischen dem Abstandswert AB1 und dem Abstandswert AB3 und/oder eine Abstandsänderung zwischen dem Abstandswert AB2 und dem Abstandswert AB3 bestimmt wird. Zumindest eine dieser Abstandsänderungen, vorzugsweise alle Abstandsänderungen, und die jeweils dazugehörigen Wegstrecken zwischen den zugehörigen Wegstreckenstellen S1, S2 und S3 wird dann wiederum für die Bestimmung des Abstands d1 zugrunde gelegt.

In besonders vorteilhafter Weise wird dann bei sich weiter fortbewegendem Kraftfahrzeug 1 auch an einer weiteren Wegstreckenstelle S4, die dann dem Objekt 8 schon relativ naheliegt, ein weiterer Abstandswert AB4 erfasst. In dem Zusammenhang kann dann auch hier vorzugsweise eine Abstandsänderung aus einer Differenzbildung der Abstandswerte AB1 und AB4 und/oder der Abstandswerte AB2 und AB4 und/oder der Abstandswerte AB3 und AB4 bestimmt werden. Zusätzlich wird dann unter Berücksichtigung der jeweils zugehörigen Wegstrecken auf Basis der Differenzbildung zwischen den Wegstreckenstellen S1 und S4 und/oder S2 und S4 und/oder S3 und S4 eine Bestimmung des Abstands d1 vollzogen.

Vorzugsweise wird eine Mehrzahl derartiger Abstandsänderungen und dazugehöriger Wegstrecken bestimmt und diese Informationen für eine Bestimmung des lateralen Abstands d1 zur in die Umgebung 7 verlängerten Längsachse L berücksichtigt.

Es kann somit insbesondere, vorzugsweise abhängig von der Anzahl von zugrunde gelegten Abstandsänderungswerten und dazugehörigen Wegstrecken, ungefähr eine Lage des Objekts 8, insbesondere des Mittelpunkts 11 zur Längsachse L angegeben werden und somit zumindest ungefähr erkannt werden, ob sich dieses Objekt 8 mit seinem Mittelpunkt 11 nahe zur Längsachse L befindet oder in einem größeren Abstand dazu angeordnet ist.

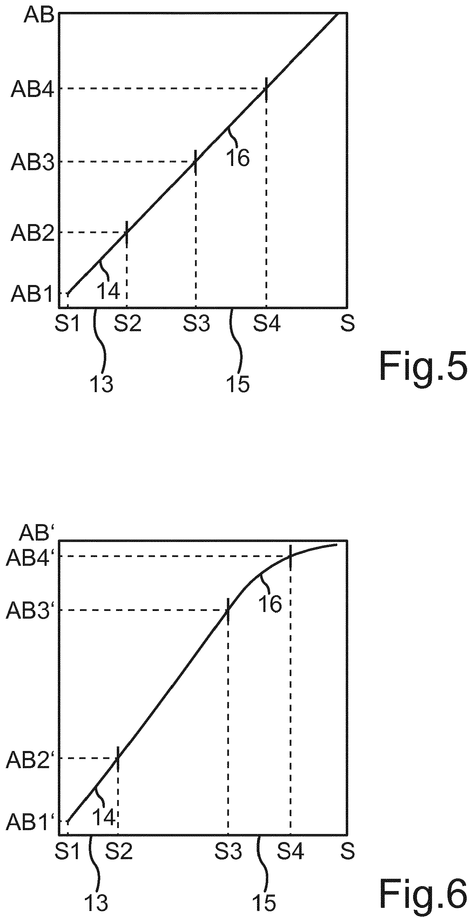

In dem Zusammenhang darf auch auf das Diagramm in Fig. 5 verwiesen werden. Dort ist ein Diagramm gezeigt, bei welchem auf der horizontalen Achse die Fahrstrecke S mit den entsprechenden Wegstreckenstellen S1 bis S4 eingezeichnet ist. Auf der vertikalen Achse ist der Abstand des Kraftfahrzeugs 1, und insbesondere der Detektionseinrichtung 3 zum Objekt 8, aufgetragen und die jeweiligen Abstandswerte AB1 bis AB4 beispielhaft eingezeichnet.

In Bezug auf die Erläuterungen zu Fig. 1 bis Fig. 4 bezüglich dem Objekt 8 wird ein Wert der wegstreckenabhängigen Abstandsänderung mit einem ersten wegstreckenabhängigen Abstandsänderungs-Schwellwert verglichen und abhängig von dem Vergleich wird erkannt, ob das Objekt 8 in einem um die Längsachse L definierten ersten Bereich, der im Ausführungsbeispiel insbesondere durch den Fahrschlauch 6 gebildet ist, angeordnet ist. Aus den physikalischen Grundlagen folgt, dass dann, wenn sich das Kraftfahrzeug 1 fortbewegt und das Objekt 8 quasi auf der verlängerten Längsachse L liegt, sich ein linearer Zusammenhang zwischen den jeweiligen Abstandsänderungen und den zurückgelegten Wegstrecken ergibt. Dies ist auch beispielhaft in dem Diagramm gemäß Fig. 2 dargestellt. In dem Zusammenhang ist es vorteilhaft, dass der Wert der wegstreckenabhängigen Abstandsänderung mit einem zweiten wegstreckenabhängigen Abstandsänderungs-Schwellwert verglichen wird und abhängig von dem Vergleich erkannt wird, ob das Objekt 8 auf der Längsachse L oder seitlich nahe der verlängerten Längsachse L angeordnet ist.

Diese Erkennung erfolgt dann insbesondere gemäß bereits dargelegter obiger Erläuterung dadurch, dass bei mehreren miteinander verglichenen Abstandswerten AB1, AB2, AB3 und AB4 zwischen den jeweilig zugehörigen Wegstreckenstellen S1, S2, S3, S4 eine strenge Linearität bzw. eine Linearität innerhalb eines kleinen Toleranzintervalls auftritt.

Vorzugsweise ist vorgesehen, dass zumindest ein Abstandswert in einem ersten Längendrittel der gesamten Länge der Fahrstrecke S bestimmt wird, und zumindest ein Abstandswert in einem dritten Längendrittel der gesamten Fahrstrecke S bestimmt wird. Durch eine derartige Ausgestaltung wird an relativ weit auseinander liegenden Wegstreckenstellen entlang der Fahrstrecke S jeweils zumindest ein Abstandswert erfasst, so dass sich aufgrund dieser Vorgehensweise eine größere Genauigkeit bezüglich der Position erreichen lässt, als wenn in einem ersten Längendrittel alle zur Berücksichtigung vorgesehenen Abstandswerte erfasst werden. Dies ist dann gerade bei Objekten 10 wesentlich, die relativ weit von der Längsachse L mit einem Abstand d2, in lateraler Richtung gesehen, beabstandet sind. Denn bei derartigen Objekten 10 ist dann, wie dies dann später anhand der Fig. 3 erläutert wird, ein derartiger linearer Zusammenhang zwischen den Abstandsänderungen und den zurückgelegten Wegstrecken gerade im sehr nahen Bereich einer Detektionseinrichtung 3 zum Objekt 10 nicht mehr gegeben und gerade dann wird auch wiederum durch diese auf physikalischen Grundlagen basierenden Zusammenhängen diese weiter außen liegende Position des Objekts 10 erkannt.

Es kann als alternative Ausführung auch vorgesehen sein, dass jeweils zwischen zwei erfassten Abstandswerten AB1 bis AB4, die in dieses Diagramm abhängig von ihren zugehörigen Wegstreckenstellen S1 bis S4 eingetragen wurden, ein verbindender Funktionsgraph erstellt wird.

In dieser alternativen Ausführung kann beispielsweise ein erster Fahrstreckenabschnitt 13 zwischen den Wegstreckenstellen S1 und S2 definiert werden. Werden dann die in dem Diagramm gemäß Fig. 2 eingezeichneten zumindest zwei Abstandswerte AB1 und AB2 mit einem Funktionsgraphen 14 verbunden, so kann von diesem Funktionsgraphen 14 eine Steigung bestimmt werden. Darüber hinaus kann dann bespielweise auch zwischen den zumindest zwei Abstandswerten AB3 und AB4 ein weiterer Funktionsgraph 16 als Verbindungskurve erzeugt werden und auch von diesem Funktionsgraphen 16 dann eine zweite Steigung bestimmt werden. Die erste Steigung des Funktionsgraphen 14 kann mit der Steigung des Funktionsgraphen 16 verglichen werden, und abhängig von dem Vergleich der beiden Steigungen dann auf die relative Position, insbesondere den Abstand d1 von der in die Umgebung 7 verlängerten Längsachse L geschlossen werden. Sind die Steigungen gleich oder kleiner einem zweiten Steigungsschwellwert, so wird das Objekt 8 nahe zur oder auf der verlängerten Längsachse L positioniert erkannt.

Es kann vorgesehen sein, dass zur Erzeugung des Funktionsgraphen 14 und/oder 16 nicht nur die beiden Abstandswerte AB1 und AB2 sowie AB3 und AB4 berücksichtigt werden, sondern jeweils eine Mehrzahl zusätzlicher dazwischenliegender erfasster Abstandswerte berücksichtigt werden, so dass der Verlauf der Funktionsgraphen 14 und/oder 16 genauer wird und dadurch auch die jeweilige Bestimmung der Steigung exakter ist.

Bezüglich der Möglichkeiten der Bestimmung der Steigung wird auf das vorne erläuterte verwiesen.

Anhand der Darstellungen in Fig. 1 bis Fig. 4 soll im Weiteren dann auch die Positionsbestimmung des Objekts 10 noch erläutert werden. Ausgehend von der Darstellung in Fig. 1 wird auch hier dann wiederum an der Wegstreckenstelle S1 ein Abstandswert AB1' von der Detektionseinrichtung 3 zum Objekt 10 erfasst. Bewegt sich das Kraftfahrzeug 1 dann wiederum entlang des Pfeils P1, so kann an der Wegstreckenstelle S2 ein weiterer Abstandswert AB2' zum Objekt 10 erfasst werden. Dies ist in Fig. 2 dargestellt. Bei weiterem Fortbewegen des Kraftfahrzeugs 1 kann dann auch, gemäß den Darstellungen in Fig. 3 und Fig. 4 an den Wegstreckenstellen S3 und S4 eine weitere Erfassung von Abstandswerten AB3' und AB4' erfolgen.

Wie auch bereits zu der Bestimmung des Abstands d1 des Mittelpunkts 11 des Objekts 8 zu der Längsachse L dargelegt, kann entsprechendes dann auch bei der Bestimmung des Abstands d2 des Objekts 10 zur Längsachse L erfolgen. Es können hier dann auch wiederum, wie dies auch bereits zur Abstandsbestimmung des Objekts 8 dargelegt wurde, eine Abstandsänderung aus den einzelnen bestimmten Abstandswerten AB1', AB2', AB3', AB4' erfolgen und diese Abstandsänderungen mit den dazugehörigen Wegstrecken zwischen den zugehörigen Wegstreckenstellen S1, S2, S3 und S4 für die Bestimmung des Abstands d2 berücksichtigt werden.

In dem Zusammenhang ist gemäß der schematischen Darstellung in Fig. 3 darauf hinzuweisen, dass mit sich an das Objekt 10 annäherndem Kraftfahrzeug 1 bei diesbezüglich seitlich zum Fahrschlauch 6 befindlichem Objekt 10 im sich angenäherten Bereich kein linearer Zusammenhang mehr gegeben ist, wie dies beispielhaft in Fig. 3 im oberen Kurvenverlauf dargestellt ist. Anhand dieser Änderung und dem nicht mehr gegebenen linearen Zusammenhang kann dann erkannt werden, dass sich das Objekt 10 diesbezüglich entsprechend seitlich des Kraftfahrzeugs 1 befindet und einen entsprechenden größeren Abstand d2 zur Längsachse L aufweist. Insbesondere ist hier vorgesehen, dass der Wert der wegstreckenabhängigen Abstandsänderung zumindest mit einem dritten wegstreckenabhängigen Abstandsänderungs-Schwellwert verglichen wird und abhängig von dem Vergleich erkannt wird, ob das Objekt 10 in einem an den Fahrschlauch 6 angrenzenden Angrenzungsbereich 9 angeordnet ist.

Auch bei der Bestimmung des Abstands d2 des Objekts 10 kann in alternativer Weise die Erzeugung von Funktionsgraphen 14 und/oder 16 erfolgen und anhand der dann bestimmten Steigungen der Funktionsgraphen 14 und 16 und dem Vergleich dieser Steigungen der Abstand d2 bestimmt werden.

Aufgrund der bekannten Verhältnisse bezüglich der in Fig. 2 gezeigten Linearität und bezüglich der in Fig. 3 dargestellten nicht mehr gegebenen Linearität in einem nahen Bereich des Kraftfahrzeugs 1 zu einem Objekt 10 können auch sehr genau und präzise die Abstandsänderungs-Schwellwerte definiert und zugrunde gelegt werden. Auf Basis dessen kann dann durch die Abstandsänderungen und den dazugehörigen Wegstrecken und dem Vergleich mit den Abstandsänderungs-Schwellwerten die laterale Lage eines Objekts 8, 10 zur Längsachse L angegeben werden.

Es kann darüber hinaus auch vorgesehen sein, dass ein erster Abstandswert einer ersten Detektionseinrichtung 3 zu einem Objekt 8 und ein erster Abstandswert von einer weiteren Detektionseinrichtung 3 zu dem Objekt 8 an einer gleichen Wegstreckenstelle bestimmt wird und anhand dieser ersten Abstandswerte durch eine Differenzbildung eine Abstandsänderung bestimmt wird. Anhand einer unterschiedlichen zweiten Wegstreckenstelle kann dann ein zweiter Abstandswert der einen Detektionseinrichtung 3 und ein zweiter Abstandswert einer anderen Detektionseinrichtung 3 zu dem Objekt 8 bestimmt werden und wiederum daraus eine Abstandsänderung aus den beiden zweiten Abstandswerten bestimmt werden. Abhängig von diesen Abstandsänderungen und den Wegstreckenstellen und/oder einer Wegstrecke die sich zwischen den Wegstreckenstellen bemisst, kann dann wiederum eine laterale Position und somit der Abstand d1 des Objekts 8 zur in die Umgebung 7 verlängerten Längsachse L bestimmt werden. Selbiges kann auch entsprechend zur Bestimmung des Abstands d2 des Objekts 10 durchgeführt werden. Bei einer derartigen Vorgehensweise können selbstverständlich auch mehr als zwei Detektionseinrichtungen 3 berücksichtigt werden und an den Wegstreckenstellen dann jeweils drei oder mehr Abstände der jeweiligen Detektionseinrichtungen 3 zu einem zu erfassenden Objekt erfasst werden.

Die Fahrstrecke S des Kraftfahrzeugs 1 bemisst sich insbesondere von einem Startpunkt aus gesehen bis zu einer vorgebbaren Annäherung an ein erfasstes Objekt 8, 10, 11. Insbesondere ist vorgesehen, dass sich ein erster Abstandswert AB1 bzw. AB1' oder ein erster Fahrstreckenabschnitt 13 in einem ersten Längendrittel der gesamten Länge der Fahrstrecke S befindet und zumindest ein weiterer Abstandswert oder ein weiterer Fahrstreckenabschnitt, insbesondere der zweite Fahrstreckenabschnitt 15 in einem dritten Längendrittel der gesamten Fahrstrecke S befindet. Vorzugsweise ist die gesamte Fahrstrecke S oder zumindest die Fahrstrecke umfassend die zu berücksichtigenden Abstandswerte der Fahrstreckenabschnitte vollständig geradlinig.

Vorzugsweise werden zur Präzisierung des Kurvenverlaufs eines Funktionsgraphen 14 und/oder 16 eine Vielzahl, beispielsweise zumindest 3, insbesondere zumindest 5, insbesondere zumindest 10, insbesondere zumindest 100 Abstandsmessungen berücksichtigt. Es können auch mehr als zwei Fahrstreckenabschnitte gebildet werden, und die dann jeweiligen Steigungen der jeweiligen Funktionsgraphen verglichen werden.

Als Abstandswerte AB werden insbesondere radiale Abstandswerte bestimmt, die sich gerade bei Ultraschallsensoren durch die Hauptabstrahlrichtung der jeweiligen Signale definiert.

Insbesondere wird auch ein Winkel zwischen einem derartigen radialen Abstandwert AB und der Längsachse L bestimmt.

## Patentansprüche

1. Verfahren zum Bestimmen einer relativen Position eines sich in einer Umgebung (7) eines Kraftfahrzeugs (1) befindlichen stationären Objekts (8, 10) bezüglich der verlängerten Längsachse (L) des Kraftfahrzeugs (1), bei welchem bei sich entlang einer Fahrstrecke (S) sich fortbewegendem Kraftfahrzeug (1) an einer ersten Wegstreckenstelle (S1, S2, S3) der Fahrstrecke (S) ein erster Abstandswert (AB1, AB2, AB3; AB1', AB2', AB3') zwischen einer fahrzeugseitigen Detektionseinrichtung (3) und dem Objekt (8, 10) bestimmt wird und an zumindest einer zweiten Wegstreckenstelle (S2, S3, S4) der Fahrstrecke (S) ein zweiter Abstandswert (AB2, AB3, AB4; AB2', AB3', AB4') zwischen der fahrzeugseitigen Detektionseinrichtung (3) und dem Objekt (8, 10) bestimmt wird,
**dadurch gekennzeichnet, dass**
aus den zumindest zwei Abstandswerten (AB1 bis AB4; AB1' bis AB4') eine Abstandsänderung bestimmt wird und die Abstandsänderung und die dazugehörigen zwischen den Wegstreckenstellen (S1 bis S4) zurückgelegte Wegstrecke für die Bestimmung der relativen Position des Objekts (8, 10) bezüglich der verlängerten Längsachse (L) des Kraftfahrzeugs (1) berücksichtigt werden, wobei der Wert der wegstreckenabhängigen Abstandsänderung mit einem ersten wegstreckenabhängigen Abstandsänderungs-Schwellwert verglichen wird und abhängig von dem Vergleich erkannt wird, ob das Objekt (8, 10) in einem um die Längsachse definierten ersten Bereich (6) angeordnet ist, und/oder wobei der Wert der wegstreckenabhängigen Abstandsänderung mit einem zweiten wegstreckenabhängigen Abstandsänderungs-Schwellwert verglichen wird und abhängig von dem Vergleich erkannt wird, ob das Objekt (8, 10) auf oder nahe der verlängerten Längsachse (L) angeordnet ist, und/oder
wobei der Wert der wegstreckenabhängigen Abstandsänderung mit einem dritten wegstreckenabhängigen Abstandsänderungs-Schwellwert verglichen wird und abhängig von dem Vergleich erkannt wird, ob das Objekt (8, 10) in einem an einen um die Längsachse (L) definierten ersten Bereich (6) seitlich angrenzenden Angrenzungsbereich (9) angeordnet ist.

2. Verfahren nach Anspruch 1,
**dadurch gekennzeichnet, dass**
als relative Position ein Abstand (d1, d2) des Objekts (8, 10) senkrecht zur verlängerten Längsachse (L) bestimmt wird.

3. Verfahren nach einem Ansprüche 1 oder 2,
**dadurch gekennzeichnet, dass**,
zumindest ein Abstandswert (AB1 bis AB4; AB1' bis AB4') als erster Abstandswert in einem ersten Längendrittel der Fahrstrecke (S) bestimmt wird und ein zumindest ein weiterer Abstandswert (AB1 bis AB4; AB1'bis AB4') als zweiter Abstandswert in einem dritten Längendrittel der Fahrstrecke (S) bestimmt wird.

4. Verfahren nach einem der vorhergehenden Ansprüche,
**dadurch gekennzeichnet, dass**
unterschieden wird, ob sich die relative Position des Objekts (8, 10) nah an der verlängerten Längsachse (L) befindet oder weiter weg von der verlängerten Längsachse (L) befindet.

5. Verfahren nacheinem der vorhergehenden Ansprüche,
**dadurch gekennzeichnet, dass**
der erste Bereich als Fahrschlauch (6) des Kraftfahrzeugs (1) charakterisiert wird.

6. Verfahren nach einem der vorhergehenden Ansprüche,
**dadurch gekennzeichnet, dass**
ein Warnsignal zur Signalisierung einer vermeintlichen potenziellen Kollision des Kraftfahrzeugs (1) mit dem Objekt (8, 10) unterdrückt wird, wenn das Objekt (8, 10) außerhalb des ersten Bereichs (6) aber in dem Angrenzungsbereich (9) detektiert wurde.

7. Verfahren nach einem der vorhergehenden Ansprüche,
**dadurch gekennzeichnet, dass**
als der Angrenzungsbereich (9) ein derartiger bezüglich zumindest eines vorhandenen Objekts (8, 10) erfasst wird, welcher eine Ausdehnung (b2) senkrecht zu einer Längsachse (L) des ersten Bereichs (6) aufweist, die maximal 15% der Breite (b1) des ersten Bereichs (6) entspricht.

8. Verfahren nach einem der vorhergehenden Ansprüche,
**dadurch gekennzeichnet, dass**
ein Funktionsgraph (14, 16) durch darstellen der zumindest beiden Abstandswerte (AB1 bis AB4; AB1' bis AB4') abhängig von den zugehörigen Wegstreckenstellen (S1 bis S4) und Verbinden der Abstandswerte (AB1 bis AB4; AB1' bis AB4') erzeugt wird und die Steigung des Funktionsgraphen (14, 16) bestimmt wird und die Steigung für die Bestimmung der relativen Position des Objekts (8, 10) zu der Längsachse (L) berücksichtigt wird.

9. Verfahren nach einem der vorhergehenden Ansprüche,
**dadurch gekennzeichnet, dass**
die Fahrstrecke (S) geradlinig vom Kraftfahrzeug (1) durchfahren wird und/oder die Erfassung des Objekts (8, 10) bei einem Parkvorgang des Kraftfahrzeugs (1) durchgeführt wird.

10. Verfahren nach Anspruch 9,
**dadurch gekennzeichnet, dass**
die Erfassung des Objekts (8, 10) bei einem Parkvorgang auf einer Parkfläche mit seitlich naher Begrenzung als Objekt (10) durchgeführt wird.

11. Verfahren nach einem der vorhergehenden Ansprüche,
**dadurch gekennzeichnet, dass**
die Detektionseinrichtung (3) ein Ultraschallsensor ist.

12. Fahrerassistenzsystem (2) für ein Kraftfahrzeug (1) mit zumindest einer Detektionseinrichtung (3) zum Erfassen eines Objekts (8, 10) in einer Umgebung (7) eines Kraftfahrzeugs (1), welches dazu ausgelegt ist, ein Verfahren nach einem der vorhergehenden Ansprüche durchzuführen.

13. Kraftfahrzeug (1) mit einem Fahrerassistenzsystem (2) nach Anspruch 12.

## Claims

1. Method for determining a relative position of a stationary object (8, 10), located in the surroundings (7) of a motor vehicle (1), with respect to the extended longitudinal axis (L) of the motor vehicle (1), in which, when a motor vehicle (1) is moving along a route (S), a first distance value (AB1, AB2, AB3; AB1', AB2', AB3') between a vehicle-end detection device (3) and the object (8, 10) is determined at a first route point (S1, S2, S3) on the route (S), and a second distance value (AB2, AB3, AB4; AB2', AB3', AB4') between the vehicle-end detection device (3) and the object (8, 10) is determined at at least one second route point (S2, S3, S4) on the route (S),
**characterized in that**
a change in distance is determined from the at least two distance values (AB1 to AB4; AB1' to AB4'), and the change in distance and the associated distance travelled between the route points (S1 to S4) is taken into account for the determination of the relative position of the object (8, 10) with respect to the extended longitudinal axis (L) of the motor vehicle (1), wherein the value of the route-point-dependent change in distance is compared with the first route-point-dependent threshold value of the change in distance, and depending on the comparison it is detected whether the object (8, 10) is arranged in a first area (6) which is defined around the longitudinal axis, and/or wherein the value of the route-point-dependent change in distance is compared with a second route-point-dependent threshold value of the change in distance, and depending on the comparison it is detected whether the object (8, 10) is arranged on or near to the extended longitudinal axis (L), and/or
wherein the value of the route-point-dependent change in distance is compared with a third route-point-dependent threshold value of the change in distance, and depending on the comparison it is detected whether the object (8, 10) is arranged in an adjacent area (9) which is laterally adjacent to a first area (6) defined around the longitudinal axis (L).

2. Method according to Claim 1,
**characterized in that**
a distance (d1, d2) of the object (8, 10) perpendicularly with respect to the extended longitudinal axis (L) is determined as a relative position.

3. Method according to either of Claims 1 and 2, **characterized in that**
at least one distance value (AB1 to AB4; AB1' to AB4') is determined as a first distance value in a first third of the length of the route (S), and an at least one further distance value (AB1 to AB4; AB1' to AB4') is determined as a second distance value in a third of the length of the route (S).

4. Method according to one of the preceding claims, **characterized in that**
it is discerned whether the relative position of the object (8, 10) is located near to the extended longitudinal axis (L) or is located further away from the extended longitudinal axis (L).

5. Method according to one of the preceding claims, **characterized in that**
the first area is characterized as a driving tube (6) of the motor vehicle (1).

6. Method according to one of the preceding claims, **characterized in that**
a warning signal for signalling an assumed potential collision of the motor vehicle (1) with the object (8, 10) is suppressed if the object (8, 10) was detected outside the first area (6) but in the adjoining area (9).

7. Method according to one of the preceding claims, **characterized in that**
such a, with respect to at least one object (8, 10) which is present, which has an extent (b2) perpendicular to a longitudinal axis (L) of the first area (6) which corresponds at maximum to 15% of the width (b1) of the first area (6), is sensed as the adjoining area (9).

8. Method according to one of the preceding claims, **characterized in that**
a function graph (14, 16) is generated by representing the at least two distance values (AB1 to AB4; AB1' to AB4') as a function of the associated route points (S1 to S4) and by connecting the distance values (AB1 to AB4; AB1' to AB4'), and the gradient of the function graph (14, 16) is determined, and the gradient is taken into account for determining the relative position of the object (8, 10) with respect to the longitudinal axis (L).

9. Method according to one of the preceding claims, **characterized in that**
the route (S) is travelled along linearly by the motor vehicle (1), and/or the sensing of the object (8, 10) is carried out during a parking process of the motor vehicle (1).

10. Method according to Claim 9,
**characterized in that**
the sensing of the object (8, 10) is carried out during a parking process on a parking area with laterally close delimitation as an object (10).

11. Method according to one of the preceding claims, **characterized in that**
the detection device (3) is an ultrasonic sensor.

12. Driver assistance system (2) for a motor vehicle (1) having at least one detection device (3) for sensing an object (8, 10) in the surroundings (7) of a motor vehicle (1), which driver assistance system (2) is configured to carry out a method according to one of the preceding claims.

13. Motor vehicle (1) having a driver assistance system (2) according to Claim 12.

## Revendications

1. Procédé de détermination d'une position relative d'un objet (8, 10) fixe qui se trouve dans un environnement (7) d'un véhicule automobile (1) par rapport à l'axe longitudinal (L) prolongé du véhicule automobile (1), avec lequel, lorsque le véhicule automobile (1) avance le long d'un parcours (S), une première valeur d'écart (AB1, AB2, AB3 ; AB1', AB2', AB3') entre un dispositif de détection (3) côté véhicule et l'objet (8, 10) est déterminée au niveau d'un premier point de trajet (S1, S2, S3) du parcours (S) et une deuxième valeur d'écart (AB2, AB3, AB4 ; AB2', AB3', AB4') entre le dispositif de détection (3) côté véhicule et l'objet (8, 10) est déterminée au niveau d'au moins un deuxième point de trajet (S2, S3, S4) du parcours (S), **caractérisé en ce que**
une variation d'écart est déterminée à partir des au moins deux valeurs d'écart (AB1 à AB4 ; AB1' à AB4') et la variation d'écart ainsi que le trajet associé parcouru entre les points de trajet (S1 à S4) sont pris en compte pour la détermination de la position relative de l'objet (8, 10) par rapport à l'axe longitudinal (L) prolongé du véhicule automobile (1),
la valeur de la variation d'écart dépendante du trajet étant comparée à une première valeur de seuil de variation d'écart dépendante du trajet et le fait que l'objet (8, 10) soit disposé dans une première zone (6) définie autour de l'axe longitudinal étant reconnu en fonction de la comparaison, et/ou
la valeur de la variation d'écart dépendante du trajet étant comparée à une deuxième valeur de seuil de variation d'écart dépendante du trajet et le fait que l'objet (8, 10) soit disposé sur ou à proximité de l'axe longitudinal (L) prolongé étant reconnu en fonction de la comparaison, et/ou
la valeur de la variation d'écart dépendante du trajet étant comparée à une troisième valeur de seuil de variation d'écart dépendante du trajet et le fait que l'objet (8, 10) soit disposé dans une zone adjacente (9) latéralement limitrophe d'une première zone (6) définie autour de l'axe longitudinal (L) étant reconnu en fonction de la comparaison.

2. Procédé selon la revendication 1, **caractérisé en ce que** la position relative déterminée est un écart (d1, d2) de l'objet (8, 10) perpendiculairement à l'axe longitudinal (L) prolongé.

3. Procédé selon l'une des revendications 1 ou 2, **caractérisé en ce qu'**au moins une valeur d'écart (AB1 à AB4 ; AB1' à AB4') est déterminée en tant que première valeur d'écart dans un premier tiers de longueur du parcours (S) et au moins une valeur d'écart supplémentaire (AB1 à AB4 ; AB1' à AB4') est déterminée en tant que deuxième valeur d'écart dans un premier tiers de longueur du parcours (S).

4. Procédé selon l'une des revendications précédentes, **caractérisé en ce que** la différence est faite entre le fait que la position relative de l'objet (8, 10) se trouve proche de l'axe longitudinal (L) prolongé ou se trouve plus loin de l'axe longitudinal (L) prolongé.

5. Procédé selon l'une des revendications précédentes, **caractérisé en ce que** la première zone est **caractérisée** en tant que couloir de conduite (6) du véhicule automobile (1).

6. Procédé selon l'une des revendications précédentes, **caractérisé en ce qu'**un signal d'alerte destiné à signaler une collision potentielle supposée du véhicule automobile (1) avec l'objet (8, 10) est inhibé lorsque l'objet (8, 10) a été détecté en-dehors de la première zone (6), mais dans la zone adjacente (9).

7. Procédé selon l'une des revendications précédentes, **caractérisé en ce que** la zone adjacente (9) détectée est une telle par rapport à au moins un objet (8, 10) présent qui présente une extension (b2) perpendiculaire à l'axe longitudinal (L) de la première zone (6) qui correspond au maximum à 15 % de la largeur (b1) de la première zone (6) .

8. Procédé selon l'une des revendications précédentes, **caractérisé en ce qu'**un graphe de fonction (14, 16) est généré en représentant les au moins deux valeurs d'écart (AB1 à AB4 ; AB1' à AB4') en fonction des points de trajet (S1 à S4) associés et en reliant les valeurs d'écart (AB1 à AB4 ; AB1' à AB4') et la pente des graphes de fonction (14, 16) est déterminée et la pente est prise en compte pour la détermination de la position relative de l'objet (8, 10) par rapport à l'axe longitudinal (L).

9. Procédé selon l'une des revendications précédentes, **caractérisé en ce que** le parcours (S) est traversé en ligne droite par le véhicule automobile (1) et/ou la détection de l'objet (8, 10) est effectuée lors d'une manœuvre de stationnement du véhicule automobile (1).

10. Procédé selon la revendication 9, **caractérisé en ce que** la détection de l'objet (8, 10) est effectuée lors d'une manœuvre de stationnement sur une aire de stationnement avec une délimitation latéralement proche en tant qu'objet (10).

11. Procédé selon l'une des revendications précédentes, **caractérisé en ce que** le dispositif de détection (3) est un capteur à ultrasons.

12. Système d'assistance au conducteur (2) pour un véhicule automobile (1), comprenant au moins un dispositif de détection (3) destiné à détecter un objet (8, 10) dans un environnement (7) d'un véhicule automobile (1), lequel est conçu pour mettre en œuvre un procédé selon l'une des revendications précédentes.

13. Véhicule automobile (1) comprenant un système d'assistance au conducteur (2) selon la revendication 12.
